# EUROPEAN PATENT APPLICATION

(11) **EP 1 940 107 A1**
(43) Date of publication of application: **02.07.2008**
(21) Application number: 06817837.5
(22) Date of filing: 16.11.2006
(51) Int. Cl.: H04L 29/06

(54) **A METHOD FOR PROCESSING DATA SYNCHRONIZATION AND CLIENT TERMINAL, SERVER AND DATA SYNCHRONIZATION SYSTEM THEREOF**

(30) Priority: 16.11.2005 CN 200510115392
(71) Applicant: Huawei Technologies Co., Ltd., Longgang District Shenzhen 518129 (CN)
(72) Inventor: YU, Hongbin, Guangdong 518129 (CN); CHEN, Chunrong, Guangdong 518129 (CN); ZHOU, Yingjun, Guangdong 518129 (CN); GAO, Wei, Guangdong 518129 (CN)
(74) Representative: Körber, Martin Hans
(86) International application number: PCT/CN2006/003092
(87) International publication number: WO 2007/056954

(57) **Abstract**

A method for processing data synchronization includes: client terminal performing corresponding updating process for the updating data item transmitted from server; and stores the global unique identity (GUID) corresponding to the updating data item sent from the server; if this synchronization process is interrupted, after next synchronization process is re-initiated, the client terminal reports the stored GUID to server memory; according to the stored result, the server transmits GUID and the corresponding updating data items which are not included in the stored result in itself updating database to the client terminal, then returns to procedure. Correspondingly, the present invention also provides a client terminal, server and data synchronization system. The present invention enables to complete data synchronization normally even if the case that the data synchronization process is interrupted.

## Description

### Field of the Invention

The present invention relates to technologies for processing Synchronization Markup Language (SYNCML) protocol synchronization, in particular, to a method for processing data synchronization, a client terminal, a server, and a data synchronization system.

### Background of the Invention

The modem society is an information society. A user needs to receive and send information and to execute various applications on a terminal anytime anywhere. Both results of the information communication and of the application execution may need to be stored in the terminal and to keep consistent with the corresponding data in other communication devices. For example, an address list is usually stored in a mobile phone or a Personal Digital Assistant (PDA), and a same address list may also be stored in a computer or a laptop in the office or at home. The user always desires to keep information in these communication devices consistent with each other, i.e. when data information in one of the communication devices is modified, the corresponding data information in other communication devices may also be modified correspondingly. This is a data synchronization process between different communication devices.

Terminal devices to perform data synchronization can be any network devices, such as a palmtop, a PDA, a mobile phone and a desktop computer. In any network, the data to be operated into synchronization may be any network data. A user may access and operate a same set of data information via different communication devices. The technology of SYNCML is a new universal standard technology proposed to implement the above data synchronization process.

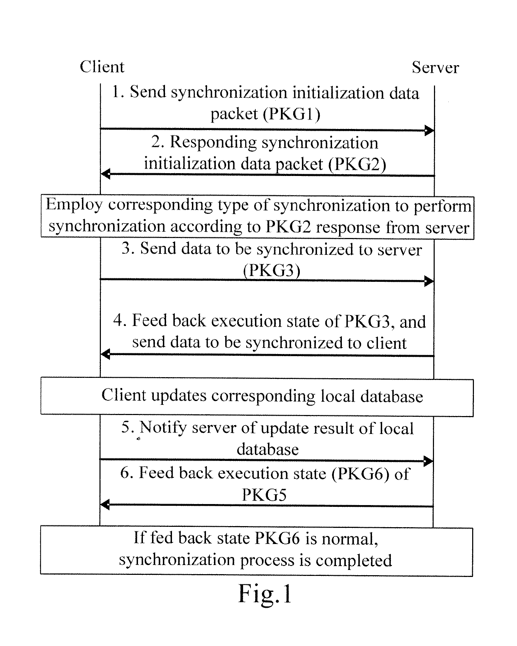

Referring to Figure 1, a schematic diagram shows the data synchronization process between a client and a server using the SYNCML protocol in the prior art. Six data packets PKG1 to PKG6 need to be exchanged between the client and the server in one SYNCML synchronization process. The major process is as follows.

1. No matter by which party the SYNCML synchronization process is initiated, the client firstly sends a synchronization initialization data package PKG1 to the server. PKG1 mainly includes client authentication information and information of device capability etc.

2. Upon receiving PKG1, the server performs authentication on the client according to the client authentication information contained in PKG1, and verifies the account information of the client. The result of the verification and information about designated synchronization type are fed to the client by a synchronization initialization response data packet (PKG2).

3. The client analyzes the synchronization type designated in received PKG2, packages all data in a local database that has been modified since the completion of the last synchronization (including data that are added, deleted or modified) in a data packet PKG3 and sends the packet PKG3 to the server.

Usually, in the operation log of the local database, the client identifies the position of the operation log when the last synchronization process was completed via a log ID. Usually, an "anchor" is employed to identify the location. Thus, when the synchronization process is to be performed next time, the data that needs to be synchronized with the server is information recorded in the log after the anchor identity. The format of log information for reference of the client is shown in the following Table 1 (wherein LUID represents local unique identity):

**Table 1**

| Anchor | LUID | Operation Performed |
|---|---|---|
| 1110 | 555 | Add |
| 1111 | 168 | Replace |
| 1112 | 123 | Delete |
| 1113 | 556 | Add |

4. Upon receiving PKG3, the server executes the corresponding operational instructions in PKG3 and updates the data in its database in turn corresponding to the data modified in the client.

When returning state information of executing the above operational instructions to the client via a data packet PKG4, the server also packages all data in its own database that has been modified since last synchronization (including data that is added, deleted or altered) into the data packet PKG4 and returns the packet PKG4 to the client.

5. Upon receiving PKG4, the client executes the corresponding operational instructions in PKG4 and updates the data in its database in turn corresponding to the data modified in the server.

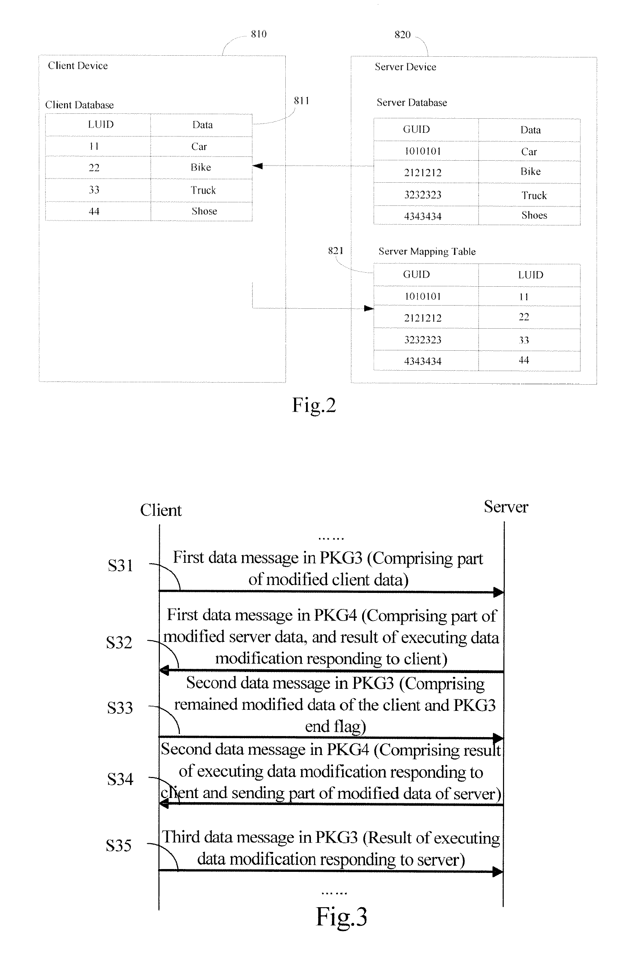

When returning state information about executing the above operational instructions to the server via a data packet PKG5, if the received PKG4 includes an add instruction for adding a new data item in the local database, the client generates corresponding ID mapping information and notifies the ID mapping information to the server via a data packet PKG5 after successfully adding the new data item in the local database. Figure 2 is a schematic diagram showing the state of the client generating ID mapping information table and feeding the ID mapping information table to the server according to an add instruction for adding data sent from the server. In Figure 2, GUID represents a global unique identity, and LUID represents a local unique identity. For the same newly added data item, server 820 generates a GUID value that is uniquely identified on the server side to identify the data item, while client 810 generates an LUID value that is uniquely identified on the client side to identify the data item. To make a data item to be operated by the server corresponding to a same data item to be operated by the client, an ID mapping information table needs to be maintained on server 820. In Figure 2, provided that "Car" is a newly added data item in server 820, when server 820 sends the newly added data item and the corresponding GUID value "1010101" to client 810, client 810 adds the newly added data item "Car" to the local database 811 and then allocates an LUID value "11" to the newly added data item. Then client 810 establishes a mapping relationship between the LUID value "11" allocated to the newly added data item and the GUID value "1010101" allocated to the newly added data item by the server, and sends the mapping relationship to server 820. By similarly performing the above process for the subsequent newly added data items, server 820 obtains an ID mapping information table "Server Mapping Table" 821, and maintains the ID mapping information table.

6. Upon maintaining the ID mapping information contained in the received PKG5 to its mapping information table, the server feeds back a state of executing the maintenance instruction to the client via a data packet PKG6. Upon receiving the data packet PKG6, if all the state codes in the PKG6 are normal, the client marks the successful completion of the data synchronization process.

With the above SYNCML synchronization process, when a user performs data synchronization of large data volume with a server on a wired network through a SYNCML synchronization software installed in a wireless communication terminal, the speed of data synchronization process is often slow and a lot of time is consumed due to poor wireless network signal or heavy load of the operating system of the communication terminal. In such a case, the user may interrupt the data synchronization process before the data synchronization process is completed, because the user cannot bear the long-time waiting. In addition, the data synchronization process may be interrupted before completed due to other reasons, for example, the communication terminal being powered off suddenly, the network signal fading away gradually or an incoming call.

If the data synchronization process between the communication terminal and the server is interrupted before completed due to the above reasons, when the communication terminal initiates a new synchronization request subsequently, all the modified data needs to be resynchronized. In other words, data that had been synchronized before the interruption need to be resynchronized in the new synchronization process. During the resynchronization process, there may occur the above mentioned network conditions and current state of terminal changes again, and the restarted data synchronization process may be interrupted on initiative or passively due to the same reasons mentioned above. The repeated interruption may influence the realization data synchronization.

### Summary of the Invention

A method for processing data synchronization, a client, a server, and a data synchronization system are provided, so that data synchronization may be completed correctly even in the case that the process of data synchronization is interrupted.

In one aspect of the invention, a method for processing data synchronization includes:

performing, by a client, corresponding modification on a modified data item sent from a server;

buffering, by the client, a GUID corresponding to the modified data item sent from the server;

reporting, by the client, the buffered GUID to the server after restarting the synchronization process next time in the case that the current synchronization process is interrupted; and

storing, by the server, the reported information, sending a GUID and a corresponding modified data item in its own modification database to the client, the GUID is not comprised in the stored result; and performing, by the client, corresponding modification process.

In another aspect of the invention, a client comprises:

a modification processing unit, adapted for performing corresponding modification on a modified data item sent from a server;

an identity buffering unit, adapted for buffering a GUID corresponding to the modified data item sent from the server; and

an identity reporting unit, adapted for reporting the GUID buffered by the identity buffering unit to the server after restarting the synchronization process next time in the case that the current synchronization process is interrupted.

In a further aspect of the invention, a server comprises:

a reported information storage unit, adapted for storing a GUID reported by a client, the GUID corresponds to a modified data item sent from the server that has been updated by the client;

a searching unit, adapted for searching a GUID that is not comprised in the reported information storage unit and a corresponding modified data item in its own modification database; and

a sending unit, adapted for sending a GUID and a corresponding modified data item found by the searching unit to the client.

In a still further aspect of the invention, a data synchronization system comprises a client and a server;

the client is adapted to perform corresponding modification on a modified data item sent from a server, buffer a GUID corresponding to the modified data item sent from the server, and report the buffered GUID to the server after restarting the synchronization process next time in the case that the current synchronization process is interrupted; and

the server is adapted to store the reported information, send the GUID and the corresponding modified data item in its own modification database to the client, the GUID is not comprised in the stored result.

In the embodiments of the invention, a client performs corresponding modification on a modified data item sent from a server and buffers a GUID corresponding to the modified data item sent from the server, thus if the current synchronization process is interrupted, the client may report the buffered GUID to the server after restarting the synchronization process next time, and the server stores the GUID and sends GUIDs that are not comprised in the stored result and corresponding modified data items in its modification database. As a result, the amount of the modification data sent to the client by the server after restarting the synchronization process may be reduced, the time for synchronization processing may be saved, so that data synchronization may be completed correctly even in the case that a data synchronization process is interrupted.

### Brief Description of the Drawings

Figure 1 is a schematic diagram showing a process of data synchronization processing between a client and a server using SYNCML protocol in the prior art;

Figure 2 is a schematic diagram showing the state of a client generating an ID mapping information table and feeding it back to the server according to an add instruction for adding data sent from the server in the prior art;

Figure 3 is a schematic diagram showing the process of performing exchange of modified data between a client and a server in the prior art;

Figure 4 is a flow chart showing the main principle of implementing a method for processing data synchronization according to an embodiment of the invention;

Figure 5 is a block diagram showing the main structure of a client according to an embodiment of the invention;

Figure 6 is a block diagram showing the main structure of a client with an identity deleting unit added according to an embodiment of the invention;

Figure 7 is a block diagram showing the main structure of an identity buffering unit in the client according to an embodiment of the invention; and

Figure 8 is a block diagram showing the main structure of a server according to an embodiment of the invention.

### Detailed Description of the Embodiments

Embodiments of the invention may solve the problem that a data synchronization process for large amount of data cannot be completed because of on-initiative or passive interruption due to long time consumption.

Embodiments of the invention have been made on the basis of the following considerations: by analyzing the above SYNCML synchronization process in the prior art, it can be found that data packets PKG3 and PKG4 exchanged between the client and the server account for a big proportion of the whole synchronization process both in execution time and traffic. The specific reasons are as follows:

The data packet PKG3 is mainly adapted to carry data items modified in a client to a server, and the data packet PKG4 is mainly adapted to carry data items modified in the server to the client. The two parties also feed back results of executing the data modification operational instructions sent from the opposite party each other. Thus, no matter in the client or in the server, once the number of modified data items comes to hundreds or even thousands (it is possible that only one modified data item may occupy a space of thousands of bytes or even megas of bytes), the two data packets PKG3 and PKG4 exchanged between the client and the server may cause great time consumption and traffic consumption to the whole data synchronization process.

In the above synchronization process of large data volumes, both data in packet PKG3 and data in packet PKG4 may be respectively partitioned into a plurality of message parts to be exchanged in turn. Each message exchanging includes a process of sending request and waiting for response. Figure 3 is a schematic diagram specifically showing the process of performing exchange of changed data between a client and a server.

In Figure 3, data packet PKG3 is partitioned into a first data message (S31), a second data message (S33) and a third data message (S35) for sending; data packet PKG4 is partitioned into a first data message (S32) and a second data message (S34) for sending.

This approach is certainly time-consuming in cases that link bandwidth is insufficient or wireless network signals are weak, etc. Therefore, it needs to reduce the number of times of such exchanges of modified data as much as possible.

In each modification data message exchanged between the client and the server, packaging a newly added data item occupies a large message space. Especially for a data object of large volume (for example, newly added data items of a multimedia file such as picture, video), to package a newly added data item, it sometimes needs to partition the data item into a plurality of messages for sending respectively. Moreover, compared with a client, a server usually needs to synchronize more data to the client in a synchronization process. Therefore, in one embodiment of the invention, it is considered to reduce the number of modified data items (especially newly added data items) sent from the server to the client.

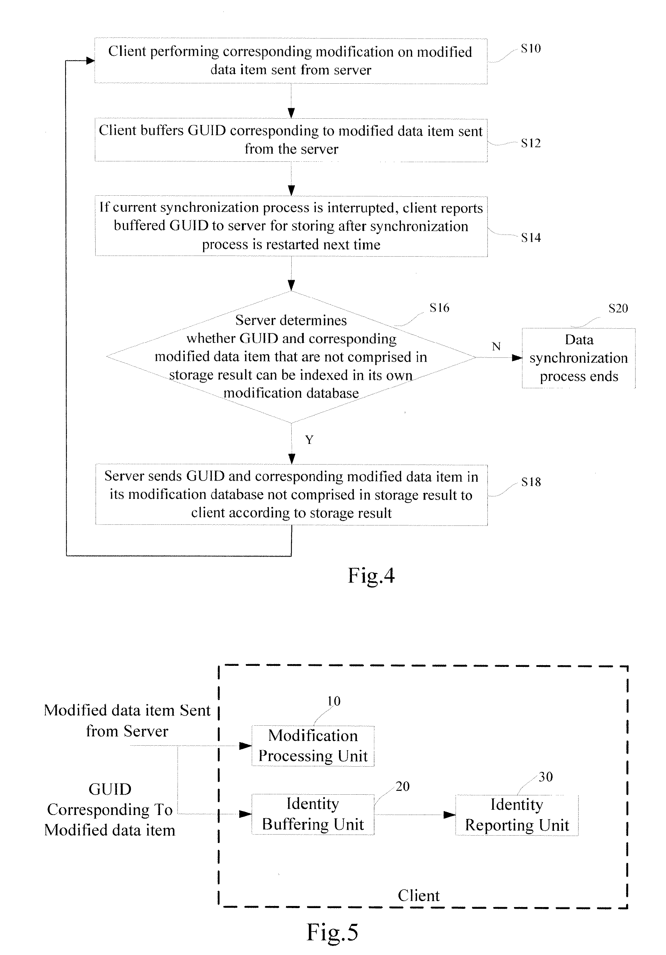

Figure 4 is a flow chart showing the main principle of implementing a method for processing data synchronization according to an embodiment of the invention. The main process of is as follows:

S10: A client performs corresponding modification according to a modified data item sent from a server;

S12: The client buffers a GUID corresponding to the above modified data item sent from the server;

S14: If the current synchronization process is interrupted, the client reports the above buffered GUID to the server for storing after restarting the synchronization process next time;

S16: The server determines whether a GUID that is not comprised in the stored result and a corresponding modified data item can be indexed in its own modification database; if yes, the following S 18 is executed; otherwise, the following S20 is executed;

S18: The server sends GUIDs that are not comprised in the stored result and corresponding modified data items in its own modification database to the client according to the stored result, and then return to S10 and continue;

S20: The current data synchronization process is completed.

In the above process, the server feeds back a successful storage response message to the client upon successfully storing the GUID reported by the client. The client may delete the buffered GUID upon receiving the successful storage response message fed back by the server.

The process for the client to buffer the GUID corresponding to the modified data item sent from the server in S12 may be implemented in the following way:

the client allocates a corresponding local unique identity LUID to the modified data item sent from the server;

a mapping relationship is established between the allocated LUID and the GUID of the modified data item sent from the server; and

the established mapping relationship is buffered, so that the GUID sent from the server is buffered.

Thus, in the above S14, if the current synchronization process is interrupted, the client may report the mapping relationship between the buffered GUID and the LUID to the server after restarting the synchronization process next time, so that the GUID buffered is reported to the server.

The above method shows better technical effects when the modified data item is a newly added data item.

The major technical principle of implementing the method for processing data synchronization according to the above embodiment of the invention is that: each time when performing a data synchronization process, the client maps the LUID allocated to a newly added data item by the client and the GUID sent from the server immediately after a local modification operation is performed on each modified data item (which will be illustrated by taking a newly added data item as an example below) and saves the mapping information in a file, no matter abnormal interruption occurs or not during the process of receiving data packet PKG4. Thus the mapping information may be sent to the server when restarting the synchronization process next time, so that the server needs not to repeatedly send a newly added data item in multiple synchronization processes.

Thus, in the case that a large amount of newly added data items in the server need to be synchronized with the client and the synchronization process is interrupted for many times, the invention may have significant effects. The client may accomplish the data synchronization of large data volume in a plurality of times.

The specific implementation of the embodiment of the invention is as follows.

Firstly, an ID mapping information table of the same format as that stored in the server (such as the above Server Mapping Table in the prior art shown in Figure 2) is also created in the client, and the created ID mapping information table is set empty.

Each time when performing a data synchronization process, the client generates mapping information of an LUID (the client will generate an LUID of a newly added data item when a local adding operation is completed) and a GUID (the data packet PKG4 sent from the server contains the GUID of the newly added data item) in the memory and saves the mapping information in the local ID mapping information table when the local adding operation for each newly added data item is completed, no matter an abnormal interruption occurs or not in the process of receiving the data packet PKG4 sent from the server. If the current synchronization process is success, the client encodes the ID mapping information generated above in data packet PKG5 and sends PKG5 to the server and reset the local ID mapping information table to empty after the successful sending. If the process of receiving the data packet PKG4 sent from the server or the subsequent process is interrupted abnormally, the ID mapping information of the newly added data item that is successfully added to the local database is already saved in the local ID mapping information table of the client.

When restarting a synchronization process subsequently, the client firstly sends all information (except for slow synchronization. Slow synchronization is a special kind of synchronization mainly initiated by the server when abnormity occurs in the server state. In such a case, the client sends all local modified data items to the server, and the server compares these data items with the data items currently existing in the server one by one and saves the data items that are not comprised in the server, and returns the data items existing in the server but not existing in the client to the client, so as to achieve consistence between the data items of the two parties) in the local ID mapping information table to the server by a data packet PKG3. Upon receiving data packet PKG3 sent from the client, the server firstly completes its own ID mapping information table according to the ID mapping information in PKG3, so as to avoid sending newly added data items that had been synchronized with the client before the interruption to the client according to its ID mapping information table when packaging data packet PKG4. In this way, data volume transmitted in a data packet PKG4 may be reduced, and the number of times of partitioning data packet PKG4 into a plurality of messages to exchange with the client may be reduced accordingly, and finally, the time for data synchronization processing may be reduced. The server may carry an ID mapping information storage success response message to be fed back to the client in data packet PKG4 sent to the client. Thus upon receiving the data packet PKG4 sent from the server, the client may immediately cancel the corresponding information from the local ID mapping information table. If the current synchronization process is interrupted abnormally at this point, the current newly added data item in the client will cause to generate a new ID mapping information and to save the information to the local ID mapping information table of the client. Thus, the data transmission volume may be reduced further when restarting a new synchronization process subsequently.

Now the specific implementation of the method for processing data synchronization according to an embodiment of the present invention will be described in details by a simplified example.

Provided that three data items (as shown in the following Table 2) are newly added to the server, but no data item is modified in the client:

**Table 2**

| GUID | Name | Phone Number |
|---|---|---|
| 10093902 | Adam | 13600001001 |
| 10093903 | Alice | 13600301101 |
| 10093904 | Mark | 13400021001 |

Then if a data synchronization process is initiated, the server sends the three newly added data items to the client by data packet PKG4. If power supply for the client is interrupted suddenly in a process of correspondingly adding the newly added data items sent from the server when only the first newly added data item has been added to the local database of the client and allocated with an LUID of 32, a piece of ID mapping information [10093902, 32] will have been generated in the local ID mapping information table of the client, while the other two newly added data items have not been processed. When restarting the client subsequently, a new data synchronization process with the server will be initiated. In the newly initiated synchronization process, the client firstly reports the saved ID mapping information [10093902, 32] to the server by data packet PKG3. Upon receiving the ID mapping information, the server considers that the data item of No. 10093902 is already synchronized with the client. Accordingly, when sending data packet PKG4, only the latter two newly added data items that are not synchronized with the client will be packaged, so that the synchronization data traffic in the current data synchronization process is reduced.

The invention further provides a client device. Figure 5 is a block diagram showing the main structure of a client device according to an embodiment of the invention. The client device mainly includes a modification processing unit 10, an identity buffering unit 20 and an identity reporting unit 30. The main functions of each component are as follows.

The modification processing unit 10 is mainly adapted to perform corresponding modification process on a modified data item sent from the server.

The identity buffering unit 20 is mainly adapted to buffer a GUID corresponding to a modified data item sent from the server.

The identity reporting unit 30 is mainly adapted to report the GUID buffered by the above identity buffering unit 20 to the server for storing when restarting a synchronization process next time in a case that the current synchronization process is interrupted.

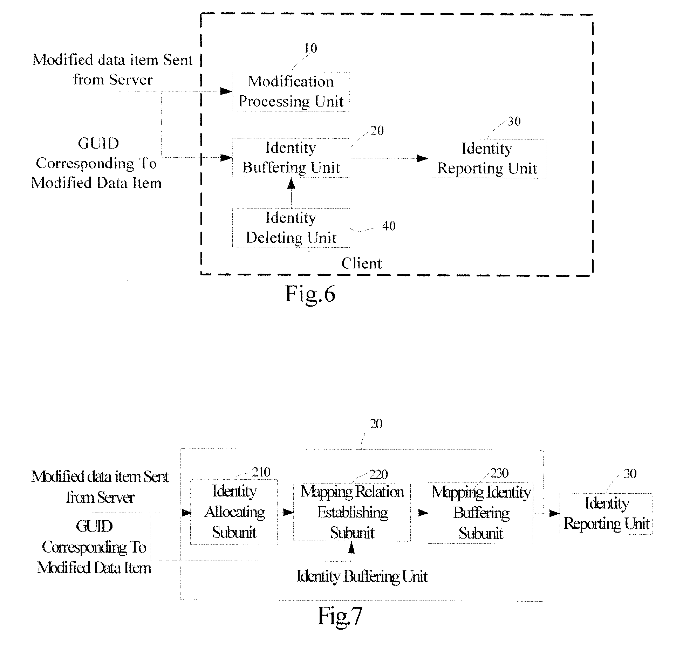

Figure 6 is a block diagram showing the main structure of a client with an identity deleting unit added according to an embodiment of the invention. The newly added identity deleting unit 40 is mainly adapted to delete a GUID buffered in the above identity buffering unit 20 upon receiving a success storage response message fed back by the server.

Figure 7 is a block diagram showing the main structure of an identity buffering unit in the client according to an embodiment of the invention. The identity buffering unit mainly includes an identity allocating subunit 210, a mapping relationship establishing subunit 220 and a mapping identity buffering subunit 230. The main functions of each component are as follows.

The identity allocating subunit 210 is mainly adapted to allocate a corresponding LUID to a modified data item sent from the server.

The mapping relationship establishing subunit 220 is mainly adapted to establish a mapping relationship between a LUID allocated by the identity allocating subunit 210 and a GUID corresponding to a modified data item sent from the server.

The mapping identity buffering subunit 230 is mainly adapted to buffer a mapping relationship established by the mapping relationship establishing subunit 220, so as to buffer a GUID sent from the server.

Correspondingly, the identity reporting unit 30 reports the mapping relationship between the LUID and the GUID buffered in the mapping identity buffering subunit 230 to the server so as to report the buffered GUID to the server.

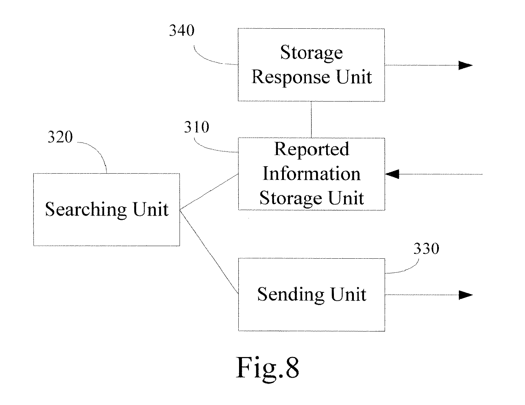

Figure 8 is a block diagram showing the main structure of a server according to an embodiment of the invention.

The server according to one embodiment of the invention includes: a reported information storage unit 310 for storing a GUID reported by the client. The GUID corresponds to the modified data item sent from the server that is updated by the client.

A searching unit 320 for searching, in its modification database, a GUID that is not included in the reported information storage unit 320 and a corresponding modified data item.

A sending unit 330 for sending a GUID and a corresponding modified data item searched by the searching unit to the client.

In addition, the server may also include a storage response unit 340 for feeding a successful storage response message to the client when the reported information storage unit 310 successfully stores a GUID.

In a specific implementation of an embodiment of the invention, the reported information storage unit is a mapping information table update unit adapted to update the mapping information table of the server according to a mapping relationship between a GUID an LUID reported by the client.

Based on the above mentioned client and server, an embodiment of the invention further provides a data synchronization system. In the data synchronization system, the client is adapted to perform corresponding modification on a modified data item sent from the server, buffer a GUID corresponding to the modified data item sent from the server, and report the buffered GUID to the server after restarting the interrupted synchronization process. The server is adapted to store the reported information and send the GUID not comprised in the storage result and the corresponding modified data item in its own modification database to the client.

Additional advantages and modifications will readily occur to those skilled in the art without departing from the scope of the present invention. Therefore, various modifications and variations are intended to be comprised in the invention is the modifications and variations belong to the scope of the appended claims and their equivalents.

## Claims

1. A method for processing data synchronization comprising:
performing, by a client, corresponding modification on a modified data item sent from a server;
buffering, by the client, a global unique identity sent from the server corresponding to the modified data item;
reporting, by the client, the buffered global unique identity to the server after restarting the synchronization process next time in a case that the current synchronization process is interrupted; and
storing, by the server, the reported information, sending a global unique identity and a corresponding modified data item in its own modification database to the client for the client to perform corresponding process; the GUID is not comprised in the stored result.

2. The method according to claim 1, wherein, after successfully storing the reported information by the server, the method further comprises:
feeding back, by the server, a successful storage response message to the client; and
deleting, by the client, the global unique identity buffered by the client upon receiving the successful storage response message fed back by the server.

3. The method according to claim 1, wherein, after successfully storing the reported information by the server, the method further comprises:
ending the data synchronization process in a case that no GUID that is not comprised in the stored result and corresponding modified data item can be indexed in the own modification database of the server.

4. The method according to claim 1, wherein buffering a global unique identity sent from the server corresponding to the modified data item comprises:
allocating, by the client, a corresponding local unique identity to the modified data item sent from the server;
creating, by the client, a mapping relationship between the local unique identity and the global unique identity sent from the server corresponding to the modified data item; and
buffering, by the client, the created mapping relationship.

5. The method according to claim 4, wherein reporting the buffered global unique identity to the server by the client is implemented by reporting the buffered mapping relationship to the server.

6. The method according to claim 5, wherein storing the reported information by the server comprises updating a mapping information table by the server according to the reported mapping relationship.

7. The method according to claim 6, wherein, after updating the mapping information table by the server, the method further comprises:
feeding a mapping information storage success response message back to the client; and
deleting the buffered mapping relationship by the client upon receiving the mapping information storage success response message fed back by the server.

8. The method according to claim 4 further comprising:
reporting, by the client, the buffered mapping relationship to the server and clear the buffered mapping relation from the client in a case that the current synchronization process is success.

9. The method according to any one of claims 1 to 8, wherein the modified data item is a newly added data item.

10. A client comprising:
a modification processing unit, adapted for performing corresponding modification on a modified data item sent from a server;
an identity buffering unit, adapted for buffering a global unique identity sent from the server corresponding to the modified data item; and
an identity reporting unit, adapted for reporting the global unique identity buffered by the identity buffering unit to the server after restarting a synchronization process next time in a case that the current synchronization process is interrupted.

11. The client according to claim 10 further comprising: an identity deleting unit, adapted for deleting the global unique identity buffered in the identity reporting unit upon receiving a successful storage response message fed back by the server.

12. The client according to claim 10, wherein the identity buffering unit comprises:
an identity allocating subunit, adapted for allocating a corresponding local unique identity to the modified data item sent from the server;
a mapping relationship creating subunit, adapted for creating a mapping relationship between the local unique identity allocated by the identity allocating subunit and the global unique identity sent from the server corresponding to the modified data item; and
a mapping identity buffering subunit, adapted for buffering the mapping relationship created by the mapping relation creating subunit.

13. The client according to claim 12, wherein the identity reporting unit is a mapping identity reporting unit adapted for reporting the mapping relationship buffered in the mapping identity buffering subunit to the server.

14. A server comprising:
a reported information storage unit, adapted for storing a global unique identity reported by a client, wherein the global unique identity corresponds to a modified data item updated by the client sent from the server;
a searching unit, adapted for searching a global unique identity and a corresponding modified data item in the own modification database of the server; the global unique identity is not comprised in the reported information storage unit; and
a sending unit, adapted for sending the global unique identity and the corresponding modified data item searched by the searching unit to the client.

15. The server according to claim 14 further comprising a storage response unit adapted for feeding a successful storage response message back to the client upon successfully storing the global unique identity by the reported information storage unit.

16. The server according to claim 14, wherein the reported information storage unit is a mapping information table updating unit adapted for updating a mapping information table in the server according to the mapping relationship between the global unique identity and the local unique identity reported by the client.

17. A data synchronization system comprising a client and a server, wherein:
the client is adapted for performing corresponding modification on a modified data item sent from the server, buffering a global unique identity corresponding to the modified data item sent from the server, and reporting the buffered global unique identity to the server upon restarting a interrupted synchronization process; and
the server is adapted for storing the reported information and sending the global unique identity and the corresponding modified data item in its modification database to the client; the global unique identity is not comprised in the storage result.
